# EUROPEAN PATENT APPLICATION

(11) **EP 4 287 313 A1**
(43) Date of publication of application: **06.12.2023**
(21) Application number: 22745679.5
(22) Date of filing: 19.01.2022
(51) Int. Cl.: H01M 4/36, H02J 7/00, H01M 10/44, H01M 10/48, H01M 10/615, H01M 10/625, H01M 10/633, H01M 10/635, H01M 10/647, H01M 10/651, H01M 10/6571

(54) **CHARGING METHOD FOR NON-AQUEOUS ELECTROLYTE SECONDARY BATTERY, CHARGING/DISCHARGING METHOD, AND CHARGING SYSTEM FOR NON-AQUEOUS ELECTROLYTE SECONDARY BATTERY**

(30) Priority: 29.01.2021 JP 2021013723
(71) Applicant: Panasonic Intellectual Property Management Co., Ltd., Osaka-shi, Osaka 540-6207 (JP)
(72) Inventor: TSUKASAKI, Takashi, Kadoma-shi, Osaka 571-0057 (JP); HORIUCHI, Yuto, Kadoma-shi, Osaka 571-0057 (JP)
(74) Representative: Novagraaf International SA
(86) International application number: PCT/JP2022/001766
(87) International publication number: WO 2022/163456

(57) **Abstract**

Provided is a charging method with which charging with good efficiency can be possible while ensuring good cycle characteristics in a non-aqueous electrolyte secondary battery comprising a negative electrode that contains a carbon material. A charging method for a non-aqueous electrolyte secondary battery according to one aspect of the present disclosure comprises a switching step for switching the control temperature of a non-aqueous electrolyte secondary battery from high temperature to low temperature, wherein the non-aqueous electrolyte secondary battery includes a positive electrode and a negative electrode which reversibly perform intercalation and deintercalation of lithium ions, and the negative electrode contains, as a negative electrode active material, a carbon material and a silicon compound. The timing of the switching step is determined by detecting that dQ_{Gr}/dQ, that is, the ratio of the amount of change in a capacity Q_{Gr} of the carbon material to the amount of change in a battery capacity Q, becomes larger than dQsi/dQ, that is, the ratio of the amount of change in a capacity Q_{Si} of the silicon compound to the amount of change in the battery capacity Q.

## Description

### TECHNICAL FIELD

The present disclosure relates to a charging method and a charging and discharging method of a non-aqueous electrolyte secondary battery, and a charging system of a non-aqueous electrolyte secondary battery.

### BACKGROUND ART

Non-aqueous electrolyte secondary batteries are used as power supplies for a wide variety of devices such as electric vehicles, and in view of improving convenience of such devices, fast-rate charging is required. Nevertheless, the fast-rate charging tends to cause deterioration of a negative electrode active material, in particular, of a silicon compound to proceed quickly in the initial period of charging. The deterioration of the negative electrode active material results in lowering of the battery capacity. PATENT LITERATURE 1 discloses a charging method of a secondary battery for reducing, by means of step charging, the initial irreversible capacity during charge-discharge cycles.

### CITATION LIST

### PATENT LITERATURE

PATENT LITERATURE 1: Japanese Unexamined Patent Application Publication No. 2000-106219

### SUMMARY

### TECHNICAL PROBLEM

However, the step charging decreases the current value in order to restrain the negative electrode active material from deteriorating, which problematically causes efficiency of the charging to decrease.

Therefore, the present disclosure aims to provide a charging method capable of performing, for a non-aqueous electrolyte secondary battery comprising a negative electrode including a carbon material, efficient charging while securing excellent cycle characteristics.

### SOLUTION TO PROBLEM

There is provided a charging method of a non-aqueous electrolyte secondary battery according to an aspect of the present disclosure, the non-aqueous electrolyte secondary battery comprising a positive electrode and a negative electrode that reversibly store and release lithium ions, the negative electrode including, as a negative electrode active material, a carbon material and a silicon compound, the charging method including a switching step of switching a control temperature of the non-aqueous electrolyte secondary battery from a high temperature to a low temperature, wherein timing of the switching step is determined by sensing that a ratio dQ_{Gr}/dQ of a change amount of a capacity Q_{Gr} of the carbon material relative to a change amount of a battery capacity Q becomes larger than a ratio dQ_{Si}/dQ of a change amount of capacity Q_{Si} of the silicon compound relative to the change amount of the battery capacity Q.

There is provided a charging and discharging method of a non-aqueous electrolyte secondary battery according to an aspect of the present disclosure, wherein after the non-aqueous electrolyte secondary battery is charged by the aforementioned charging method, the non-aqueous electrolyte secondary battery is discharged.

There is provided a charging system of a non-aqueous electrolyte secondary battery according to an aspect of the present disclosure, the charging system charging a non-aqueous electrolyte secondary battery comprising a negative electrode including, as a negative electrode active material, a carbon material and a silicon compound, the charging system comprising a charging control apparatus that performs the aforementioned charging method.

### ADVANTAGEOUS EFFECTS OF INVENTION

According to an aspect of the present disclosure, there can be provided, for the non-aqueous electrolyte secondary battery comprising the negative electrode including the carbon material, the charging method capable of performing efficient charging while securing excellent cycle characteristics. In other words, according to the charging method according to the present disclosure, cycle characteristics can be restrained from lowering while enabling short-time charging.

### BRIEF DESCRIPTION OF DRAWINGS

FIG. 1 is a block diagram showing a configuration of a charging system of a non-aqueous electrolyte secondary battery as an example of embodiments.
FIG. 2 is a sectional view of a non-aqueous electrolyte secondary battery as an example of embodiments.
FIG. 3 is a diagram for explaining a charging method of a non-aqueous electrolyte secondary battery as an example of embodiments.
FIG. 4 is a diagram for explaining a charging method of a non-aqueous electrolyte secondary battery as an example of embodiments.
FIG. 5 is a diagram for explaining a charging method of a non-aqueous electrolyte secondary battery as an example of embodiments.
FIG. 6 is a flowchart showing an example of a charging control procedure for a non-aqueous electrolyte secondary battery.

### DESCRIPTION OF EMBODIMENTS

It is an important issue to provide, for a non-aqueous electrolyte secondary battery comprising a negative electrode including a carbon material, a charging method capable of performing efficient, short-time charging and restraining deterioration of cycle characteristics. The present inventors have succeeded in restraining deterioration of cycle characteristics efficiently by switching a control temperature for the non-aqueous electrolyte secondary battery from a high temperature to a low temperature during charging of the battery.

Hereafter, an example of embodiments of the present disclosure will be described in detail. While there is hereafter exemplarily illustrated a cylindrical battery having a winding-type electrode assembly 14 housed in a cylindrical battery case 15, the battery case is not limited to having a cylindrical shape but may have a rectangular shape, for example, and may be a battery case constituted of a laminate sheet including a metal layer and a resin layer. Moreover, the electrode assembly may be a laminate-type one having a plurality of positive electrodes and a plurality of negative electrodes alternately laminated via separators. Notably, a non-aqueous electrolyte secondary battery that a charging method according to the present disclosure can be applied to only has to be a battery comprising a negative electrode that includes, as a negative electrode active material, a carbon material and a silicon compound.

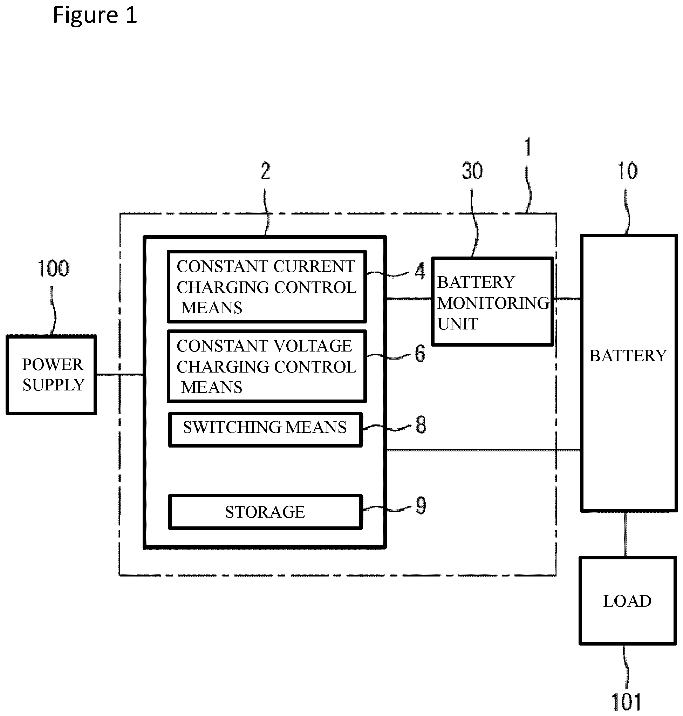

FIG. 1 is a block diagram showing a configuration of a charging system 1 of a non-aqueous electrolyte secondary battery as an example of embodiments. As exemplarily shown in FIG. 1, the charging system 1 comprises a charging control apparatus 2 that controls charging of a non-aqueous electrolyte secondary battery 10, and a battery monitoring unit 30 that monitors the charging state of the battery. The non-aqueous electrolyte secondary battery 10 is connected to a load 101 and supplies stored electric power to the load 101. The charging system 1 may comprise a group battery (also referred to as battery pack or battery module) having a plurality of non-aqueous electrolyte secondary batteries 10 connected in series, in parallel, or in series and in parallel.

The charging system 1 can be widely applied to charging apparatuses and charging facilities for a non-aqueous electrolyte secondary battery that includes a carbon material as a negative electrode active material, being able to be applied to various apparatuses and facilities such, for example, as vehicles such as an electric vehicle and a hybrid vehicle, charging facilities for vehicles, power storage facilities, and chargers for electric tools. The charging control apparatus 2 may be incorporated into a battery module or may be configured as a part of a control device of an apparatus or a facility having the charging system 1 mounted, such as a vehicle.

The charging control apparatus 2 is an apparatus that performs a charging method mentioned later. The charging control apparatus 2 determines, when charging a battery, charging conditions for the battery based on the charging state of the battery acquired from the battery monitoring unit 30. Its details being mentioned later, the charging control apparatus 2 has constant current charging control means 4 that perform a constant voltage charging step, and constant voltage charging control means 6 that perform a constant voltage charging step. Moreover, the charging control apparatus 2 has switching means 8 that perform a switching step. The charging control apparatus 2 has a rectification circuit, for example, and converts AC electric power of a power supply 100 into predetermined DC electric power to supply it to the non-aqueous electrolyte secondary battery 10.

The charging control apparatus 2 is constituted of an integrated circuit such, for example, as an IC chip or an LSI chip and has a CPU as an operation processor and a storage 9. The CPU has a function of reading and executing a program and the like prestored in the storage 9. The storage 9 has a function of temporarily storing the read program, processing data, and the like and a function of storing a control program, thresholds, and the like. Functions of each of the aforementioned charging control means are implemented by the control program being executed which is stored, for example, in the storage 9.

Moreover, the charging control apparatus 2 has a constant current circuit that controls a charging current such that DC electric power with a predetermined current value is supplied to the battery, a constant voltage circuit that controls a charging voltage such that DC electric power with a predetermined voltage value is supplied to the battery, and the like. Notably, charging circuits such as the rectification circuit, the constant current circuit, and the constant voltage circuit may be configured into a separate apparatus from the charging control apparatus 2. The charging control apparatus 2 controls the charging circuits based on the charging state of the battery acquired from the battery monitoring unit 30 and performs charging of the non-aqueous electrolyte secondary battery 10.

The battery monitoring unit 30 detects a charging current supplied to the non-aqueous electrolyte secondary battery 10 and a battery voltage, for example. The charging control apparatus 2 estimates a state of charge (SOC) from the battery voltage acquired by the battery monitoring unit 30 and performs charging control based on the SOC. The SOC indicates a rate of an electricity amount having been charged relative to a charging capacity from the fully discharged state to the fully charged state of the non-aqueous electrolyte secondary battery 10 in each charge-discharge cycle. Notably, the SOC can also be estimated from the charge-discharge current and the charge-discharge time. A conventionally known technique can be applied to the estimating method of the SOC. The charging control apparatus 2 performs constant current charging (CC charging), for example, until the battery voltage reaches a predetermined voltage, and after that, performs constant voltage charging (CV charging).

### [Non-Aqueous Electrolyte Secondary Battery]

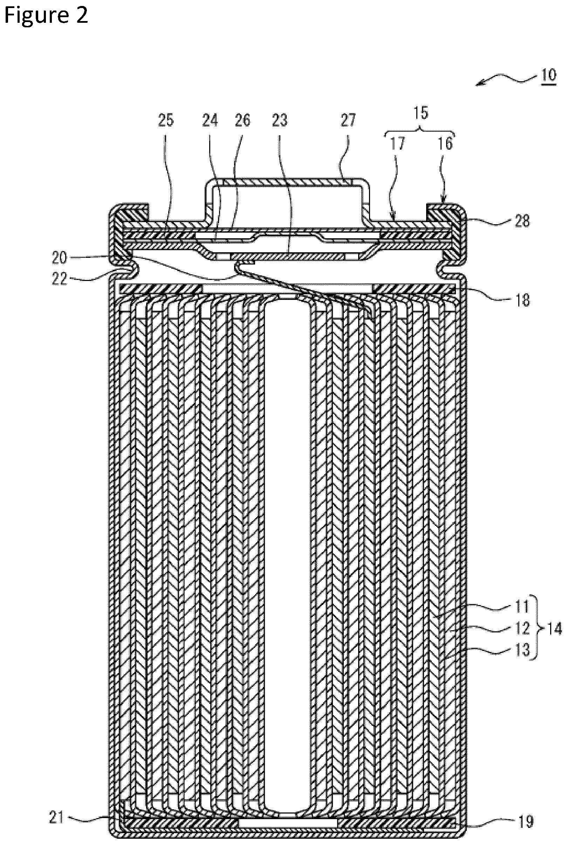

FIG. 2 is a sectional view of the non-aqueous electrolyte secondary battery 10 as an example of embodiments. As exemplarily shown in FIG. 2, the non-aqueous electrolyte secondary battery 10 comprises the electrode assembly 14, a non-aqueous electrolyte (not shown), and the battery case 15 which houses the electrode assembly 14 and the non-aqueous electrolyte. The electrode assembly 14 has a winding structure configured by a positive electrode 11 and a negative electrode 12 being wound via separators 13. The battery case 15 is constituted of a bottomed tubular exterior can 16 and a sealing assembly 17 closing the opening of the exterior can 16. Moreover, the non-aqueous electrolyte secondary battery 10 comprises a resin-made gasket 28 arranged between the exterior can 16 and the sealing assembly 17.

The non-aqueous electrolyte includes a non-aqueous solvent and an electrolyte salt dissolved in the non-aqueous solvent. For the non-aqueous solvent, there may be used, for example, esters, ethers, nitriles, amides, a mixed solvent of two or more of these, and the like. The non-aqueous solvent may contain a halogen-substituted substance having halogen atom(s) such as fluorine substituted for at least one or some of hydrogens in these solvents. Notably, the non-aqueous electrolyte is not limited to a liquid electrolyte but may be a solid electrolyte using a gelatinous polymer or the like. For the electrolyte salt, a lithium salt such, for example, as LiPF₆ is used.

The electrode assembly 14 is constituted of the long strip-shaped positive electrode 11, the long strip-shaped negative electrode 12, the two long strip-shaped separators 13, a positive electrode tab 20 joined to the positive electrode 11, and a negative electrode tab 21 joined to the negative electrode 12. The positive electrode 11 and the negative electrode 12 reversibly store and release lithium ions. In order to prevent lithium from precipitating, the negative electrode 12 is formed to have one size larger than the positive electrode 11. Namely, the negative electrode 12 is formed to be longer in the longitudinal direction and the width direction (transverse direction) than the positive electrode 11. The two separators 13 are formed to have at least one size larger than the positive electrode 11 and are arranged so as to interpose the positive electrode 11, for example.

Insulating plates 18 and 19 are arranged on the upper side and the lower side of the electrode assembly 14, respectively. In the example shown in FIG. 2, the positive electrode tab 20 attached to the positive electrode 11 extends to the sealing assembly 17 side through a through hole of the insulating plate 18, and the negative electrode tab 21 attached to the negative electrode 12 extends to the bottom of the exterior can 16 through the outside of the insulating plate 19. The positive electrode tab 20 is connected to a lower surface of a filter 23 which is a bottom plate of the sealing assembly 17 by welding or the like, and a cap 27 which is a top board of the sealing assembly 17 electrically connected to the filter 23 works as a positive electrode terminal. The negative electrode tab 21 is connected to an inner surface of the bottom of the exterior can 16 by welding or the like, and the exterior can 16 works as a negative electrode terminal.

The exterior can 16 is a bottomed cylindrical metal-made container, for example. As mentioned above, the gasket 28 is provided between the exterior can 16 and the sealing assembly 17, and the inner space of the battery case 15 is sealed. The exterior can 16 has a grooved portion 22 that is formed, for example, by pressing its side face portion from the outer side and supports the sealing assembly 17. The grooved portion 22 is preferably formed to be annular along the circumferential direction of the exterior can 16 and supports the sealing assembly 17 on its upper surface. Moreover, the upper end of the exterior can 16 is folded inward and swaged onto the peripheral edge of the sealing assembly 17.

The sealing assembly 17 has a structure having the filter 23, a lower vent member 24, an insulating member 25, an upper vent member 26, and the cap 27 laminated in the order from the electrode assembly 14 side. Each of the members constituting the sealing assembly 17 has a disc shape or a ring shape, for example, and the members except the insulating member 25 are electrically connected to one another. The lower vent member 24 and the upper vent member 26 are connected at the respective centers, and the insulating member 25 is interposed between the respective peripheral edges. When an internal pressure of the battery rises due to abnormal heat generation, the lower vent member 24 deforms so as to press the upper vent member 26 upward to the cap 27 side and ruptures, and thereby, the current path between the lower vent member 24 and the upper vent member 26 is disconnected. When the internal pressure further rises, the upper vent member 26 ruptures, and gas is discharged from an opening of the cap 27.

### [Positive Electrode]

The positive electrode 11 has a positive electrode current collector and positive electrode mixture layers formed on both surfaces of the positive electrode current collector. For the positive electrode current collector, there can be used foil of a metal, such as aluminum, that is stable in the potential range of the positive electrode 11, a film having the metal disposed on the surface layers, and the like. The positive electrode mixture layers include a positive electrode active material, a conductive agent, and a binder. The positive electrode 11 can be produced, for example, by applying, on the positive electrode current collector, positive electrode mixture slurry including the positive electrode active material, the conductive agent, the binder, and the like, drying the coating film and afterward compressing it to form the positive electrode mixture layers on both surfaces of the positive electrode current collector.

The positive electrode active material is composed of lithium-metal composite oxide as a main component. Examples of metal element(s) contained in the lithium-metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-metal composite oxide is composite oxide containing at least one of the group consisting of Ni, Co, Mn, and Al. Notably, to the surfaces of particles of the lithium-metal composite oxide, there may be caused to adhere particles of an inorganic compound such as aluminum oxide or a lanthanoid-containing compound, and/or the like.

Examples of the conductive agent included in the positive electrode mixture layers can include carbon materials such as carbon black, acetylene black, Ketjen black, and graphite. Examples of the binder included in the positive electrode mixture layers can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

### [Negative Electrode]

The negative electrode 12 has a negative electrode current collector and negative electrode mixture layers formed on both surfaces of the negative electrode current collector. For the negative electrode current collector, there can be used foil of a metal, such as copper, that which is stable in the potential range of the negative electrode 12, a film having the metal disposed on the surface layers, and the like. The negative electrode mixture layers include a negative electrode active material and a binder. The negative electrode 12 can be produced, for example, by applying, on the negative electrode current collector, negative electrode mixture slurry including the negative electrode active material, the binder, and the like, drying the coating film and afterward compressing it to form the negative electrode mixture layers on both surfaces of the negative electrode current collector.

The negative electrode mixture layers include, as the negative electrode active material, a carbon material and a silicon compound that reversibly store and release lithium ions. The carbon material is preferably graphite such as natural graphite such as natural flake graphite, massive graphite, or earthy graphite, or artificial graphite such as massive artificial graphite (MAG), or graphitized mesophase carbon microbeads (MCMB).

While the silicon compound can store more lithium ions per unit volume than the carbon material such as graphite, it tends to crack and deteriorate more when charging than the carbon material. According to a charging method of the non-aqueous electrolyte secondary battery 10 according to the present disclosure mentioned later, balance in current between the graphite and the silicon compound is changed to relieve current concentration, on the silicon compound, that is shown in the initial period of charging, and thereby, the negative electrode active material including the silicon compound can be restrained from deteriorating. The content of the silicon compound in the negative electrode mixture layers is, for example, greater than or equal to 1 mass% and less than or equal to 25 mass% relative to the total mass of the negative electrode active material, preferably greater than or equal to 5 mass% and less than or equal to 10 mass%. A mixing ratio of the silicon compound and the graphite is, for example, greater than or equal to 1:99 and less than or equal to 25:75 in mass ratio, preferably greater than or equal to 5:95 and less than or equal to 10:90.

Notably, for the negative electrode active material, there may be used a metal, other than Si, that is alloyed with lithium, an alloy containing the metal, a compound containing the metal, and the like. When a material, such as lithium titanate, that has a low conductivity is used as the negative electrode active material, a conductive agent such as carbon black may be added to the negative electrode mixture layers.

Examples of the silicon compound include a first silicon material (SiO) containing a silicon oxide phase and Si dispersed in the silicon oxide phase, a second silicon material (LSX) containing a lithium silicate phase and Si dispersed in the lithium silicate phase, a third silicon material (Si-C) containing a carbon phase and Si dispersed in the carbon phase, and the like. Among these, SiO, LSX, or Si-C is preferably used.

On the surfaces of particles of the silicon compound, there are preferably formed conductive coatings composed of a material having a higher conductivity than the silicon compound. For the material composing the conductive coatings, there can be employed at least one selected from carbon materials, metals, and metal compounds. Among these, a carbon material such as amorphous carbon is preferably employed. The carbon coatings can be formed, for example, by a CVD method using acetylene, methane, or the like, by a method of mixing coal-tar pitch, petroleum pitch, phenol resin, or the like with silicon compound particles, followed by a thermal treatment, or by the similar method.
Otherwise, the conductive coatings may be formed by causing conductive filler such as carbon black to adhere and fix onto the surfaces of particles of the silicon compound using a binder. The conductive coatings are formed, for example, to have greater than or equal to 0.5 mass% and less than or equal to 10 mass% relative to the mass of the silicon compound particles.

While for the binder included in the negative electrode mixture layers, as with the case of the positive electrode 11, fluorine resins, PAN, polyimide resins, acrylic resins, polyolefin resins, and the like may be used, styrene-butadiene rubber (SBR) or its modified substance is preferably used. The negative electrode mixture layers may include, for example, in addition to SBR or the like, CMC or its salt, polyacrylic acid (PAA) or its salt, polyvinyl alcohol, or the like.

### [Separators]

For the separators 13, there are used porous sheets having ion permeability and insulation ability. Specific examples of the porous sheets include a microporous thin film, woven fabric, nonwoven fabric, and the like. For a material of the separators 13, there are preferably employed olefin resins such as polyethylene and polypropylene, cellulose, and the like. Each separator 13 may have any of a single layer structure and a laminate structure. On the surfaces of the separators 13, heat resistant layers and/or the like may be formed.

Since in the non-aqueous electrolyte secondary battery 10, the negative electrode 12 is generally a capacity-limiting electrode, the negative electrode capacity is a battery capacity. The battery capacity of the non-aqueous electrolyte secondary battery is greater than or equal to 3000 mAh and less than or equal to 6000 mAh, for example.

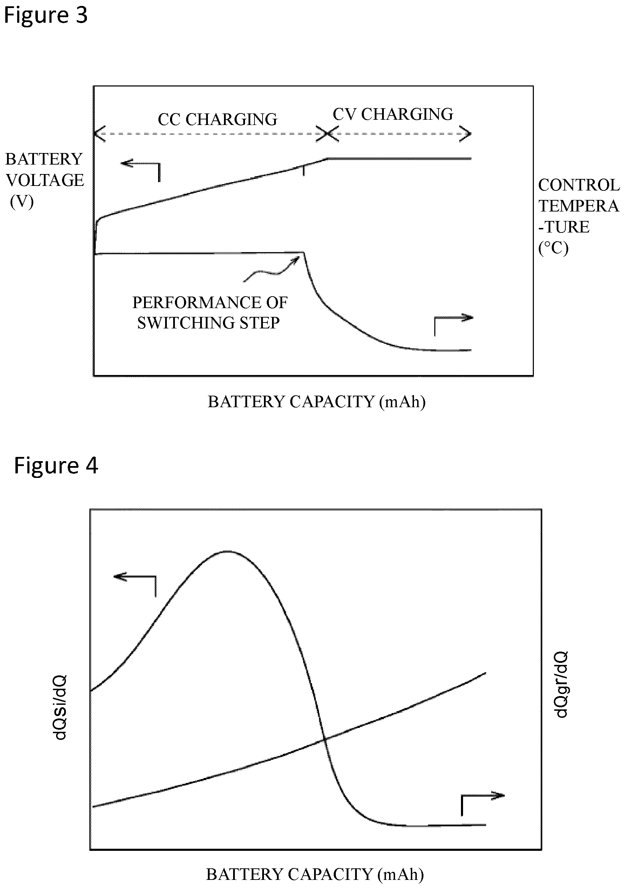

Hereafter, a charging method of the non-aqueous electrolyte secondary battery 10 is described in detail properly with reference to FIG. 3 to FIG. 4.

FIG. 3 is a graph showing changes of a battery voltage and a control temperature relative to a battery capacity in the case of performing the charging method as an example of embodiments on the non-aqueous electrolyte secondary battery 10 before its first-time charging. The charging method of the non-aqueous electrolyte secondary battery 10 has the following steps.
(1) Constant current charging step of performing charging at a constant current value I_{con} until reaching a predetermined voltage value Vₜₕ from the start of the charging.
(2) Constant voltage charging step of performing, after the constant current charging step, charging at a constant voltage value Vₜₕ until reaching a predetermined current value Iₜₕ.
(3) Switching step of switching the control temperature from a high temperature to a low temperature in timing determined by sensing that a ratio dQ_{Gr}/dQ of a change amount of a capacity Q_{Gr} of the carbon material relative to a change amount of a battery capacity Q becomes larger than a ratio dQsi/dQ of a change amount of a capacity Q_{Si} of the silicon compound relative to the change amount of the battery capacity Q.

In the present embodiment, the switching step is performed in predetermined timing in the middle of the constant current charging step. Namely, after the constant current charging (CC charging) at a high temperature is performed from the start of the charging to the predetermined timing, the CC charging at a low temperature is performed until the predetermined voltage value Vₜₕ, and after that, the constant voltage charging (CV charging) at the low temperature is performed until the predetermined current value Iₜₕ.
In an initial region of the charging until reaching the predetermined timing, since the control temperature is set to the high temperature, thereby, an ion diffusion rate in the electrolyte rises and the reaction in the negative electrode proceeds more uniformly, there is relieved the current concentration on the negative electrode side in contact with the separator, and the negative electrode active material is restrained from deteriorating. In a finish end region of the charging after reaching the predetermined timing, the control temperature is set to the low temperature, thereby, there is restrained excessive desorption of lithium ions from the positive electrode active material, and the positive electrode active material is restrained from deteriorating. As above, efficient charging can be performed while securing excellent cycle characteristics. While in the present embodiment, there is exemplarily described a case where the switching step is performed in the middle of the constant current charging step, the switching step may be performed in the middle of the constant voltage charging step.

The high temperature for the control temperature is greater than or equal to 35°C and less than or equal to 60°C, for example. In this range, the negative electrode active material can be restrained from deteriorating. The control temperature is a temperature for controlling the non-aqueous electrolyte secondary battery 10, being a temperature of an environment (ambient temperature) including the non-aqueous electrolyte secondary battery 10, for example. There are not specially limited means for setting the control temperature to the high temperature, but the environmental temperature may be set to the high temperature, for example, by installing a heater on the periphery of the non-aqueous electrolyte secondary battery 10.

The low temperature for the control temperature is greater than or equal to 0°C and less than 35°C, for example. In this range, the positive electrode active material can be restrained from deteriorating. The low temperature may be a room temperature. The control temperature may be switched from the high temperature to the low temperature, for example, by lowering the output of the heater installed on the periphery of the non-aqueous electrolyte secondary battery 10 or bringing the output of the heater to zero.

The switching step may be performed in such a range that the state of charge (SOC) of the non-aqueous electrolyte secondary battery 10 is greater than or equal to 30% and less than and equal to 60%. There is established dQor/dQ>dQsi/dQ at about 60% of SOC of the non-aqueous electrolyte secondary battery 10, the predetermined timing when the switching step is performed preferably does not exceed this in view of restraining the positive electrode active material from deteriorating. Moreover, the predetermined timing when the switching step is performed is preferably greater than or equal to about 30% in view of restraining the negative electrode active material, in particular, the silicon compound from deteriorating.

The CC charging preferably include a charging step of applying a current greater than or equal to 0.5C, still preferably including a charging step of applying a current greater than or equal to 1.0C, particularly preferably including a charging step of applying a current greater than or equal to 1.5C. For example, time for charging from 15% of SOC to 85% of SOC may be greater than or equal to 0.5 hours and less than or equal to 1 hour. As above, according to the charging and discharging method of the present disclosure, charging can be very efficiently performed.

After the non-aqueous electrolyte secondary battery 10 is charged by the aforementioned charging method, it can be discharged. Furthermore, the aforementioned charging method and the discharging may be repeatedly performed on the non-aqueous electrolyte secondary battery 10 after the discharging. Notably, when the second-time charging and later are performed, there is preferably predetermined an SOC (remaining capacity), of the non-aqueous electrolyte secondary battery 10, at which the CC charging is to be started.

Next, using FIG. 4, there is described relationship between the ratio dQsi/dQ of the change amount of the capacity Q_{Si} of the silicon compound relative to the change amount of the battery capacity Q and the ratio dQ_{Gr}/dQ of the change amount of the capacity Q_{Gr} of the carbon material relative to the change amount of the battery capacity Q. FIG. 4 is a graph showing changes of dQ_{Si}/dQ and dQ_{Gr}/dQ relative to the battery capacity in the case of performing the charging method as an example of embodiments on the non-aqueous electrolyte secondary battery 10 before the first-time charging.

In the initial region of charging, dQsi/dQ is larger than dQ_{Gr}/dQ, and lithium ions more tend to be stored by the silicon compound than the carbon material. On the other hand, in the terminal region of charging, dQ_{Gr}/dQ is larger than dQsi/dQ, and lithium ions more tend to be stored by the silicon compound than the carbon material. The silicon compound has a larger ratio of expansion due to charging than the carbon material, which causes cracks, and by bringing, in the terminal region of charging, the control temperature to the low temperature to restrain the positive electrode active material from deteriorating while bringing, in the initial region of charging, the control temperature to the high temperature to restrain the silicon compound from deteriorating, efficient charging can be performed while securing excellent cycle characteristics.

For example, dQ_{Gr}/dQ and dQ_{Si}/dQ are calculated from a ratio dV/dQ of a change amount of an open-circuit voltage OCV relative to the electric capacity Q. More in detail, dQ_{Gr}/dQ and dQ_{Si}/dQ are calculated, for example, using a charging curve of the non-aqueous electrolyte secondary battery, a charging curve of the silicon compound included in the negative electrode, a charging curve of the carbon material included in the negative electrode, and a charging curve of the positive electrode, through calculation of minimizing a residual between the charging curve of the non-aqueous electrolyte secondary battery and a combination of the charging curves of the silicon compound, the carbon material, and the positive electrode, or using a discharging curve of the non-aqueous electrolyte secondary battery, a discharging curve of the silicon compound included in the negative electrode, a discharging curve of the carbon material included in the negative electrode, and a discharging curve of the positive electrode, through calculation of minimizing a residual between the discharging curve of the non-aqueous electrolyte secondary battery and a combination of the discharging curves of the silicon compound, the carbon material, and the positive electrode.

Through the calculation of minimizing the residual between the charging curve or the discharging curve of the non-aqueous electrolyte secondary battery and the combination of the charging curves or the discharging curves of the silicon compound, the carbon material, and the positive electrode, ΔQ_{Si} and ΔQ_{Gr} over ΔV of change of the OCV (dQ_{Si}/dV and dQ_{Gr}/dV) can be calculated. Since in charging or in discharging of the battery, dV/dQ can be calculated by measuring the OCV, dQ_{Gr}/dQ and dQsi/dQ can be calculated, using dV/dQ, from (dQGr/dV)/(dV/dQ)=dQGr/dQ and (dQ_{Si}/dV)/(dV/dQ)=dQ_{Si}/dQ, respectively.

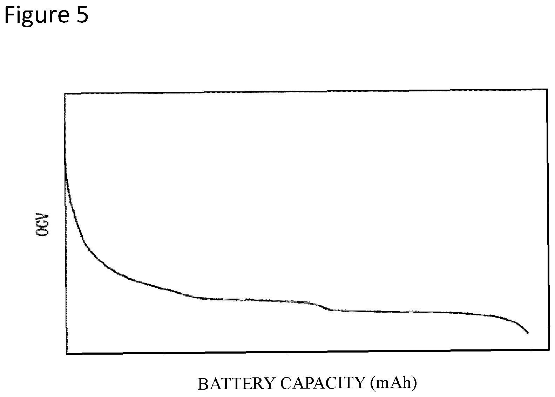

FIG. 5 is a charging curve showing relationship between the OCV and the capacity of the battery. The charging curve exemplarily shown in FIG. 5 has a plurality of inflection points. Each inflection point in the charging curve shows a change in the charging state at the negative electrode, in particular, a change in the charging state of the Si-containing compound. There appear on a dV/dQ curve obtained from the charging curve peaks corresponding to the inflection points. There appear also on a dQsi/dQ curve obtained through analysis of dV/dQ the similar peaks to those on the dV/dQ curve. Notably, there appear also on a discharging curve of the battery inflection points representing changes in the charging state of the Si-containing compound.

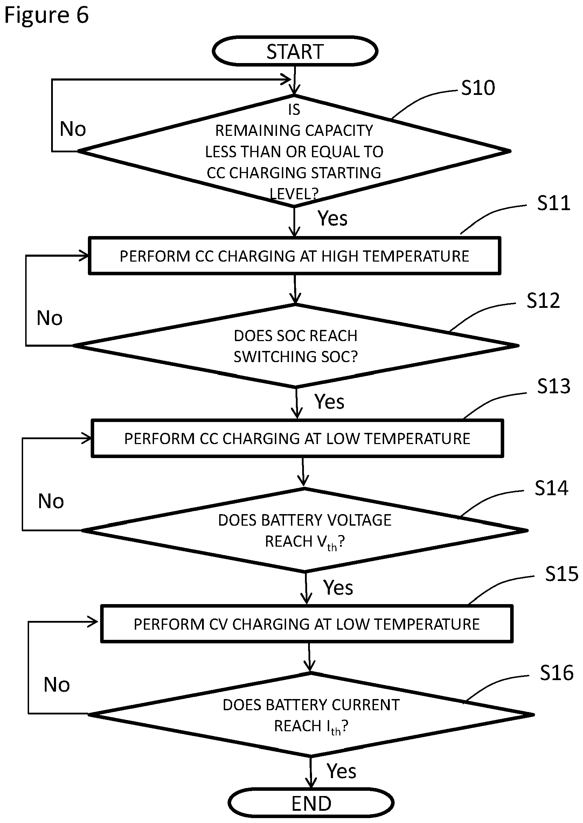

FIG. 6 is a flowchart showing an example of a control procedure in the aforementioned charging method. There is herein exemplified a case where the remaining capacity of the non-aqueous electrolyte secondary battery 10 is lower than the CC charging starting level to describe a specific example of charging control.

As exemplarily shown in FIG. 6, when the battery is charged, first, the remaining capacity of the battery is examined (S10). For example, the charging control apparatus 2 estimates the SOC (remaining capacity) of the battery from detection information of the battery voltage and the like acquired by the battery monitoring unit 30.

When the remaining capacity of the battery is less than or equal to a predefined CC charging starting level, CC charging is performed at the constant current value I_{con} at the control temperature as the high temperature until an SOC determined by sensing dQor/dQ>dQsi/dQ (hereinafter occasionally referred to as switching SOC) (S11 and S12). The CC charging is performed by the function of the constant current charging control means 4.

After reaching the switching SOC, the control temperature is switched to the low temperature, and the CC charging is performed at the constant current value I_{con} until reaching the predetermined voltage value Vₜₕ (S13 and S14). The switching of the control temperature is performed by the function of the switching means 8.

After reaching the predetermined voltage value Vₜₕ, CV charging is performed at the constant voltage value Vₜₕ until reaching the predetermined current value Iₜₕ (S15 and 16). The CV charging is performed by the function of the constant voltage charging control means 6.

### EXAMPLES

While the present disclosure is hereafter further described with examples, the present disclosure is not limited to these examples.

### <Example 1>

### [Production of Positive Electrode]

As the positive electrode active material, composite oxide expressed as LiNi_{0.82}Co_{0.15}Al_{0.03}O₂ was used. One hundred pts. mass of the positive electrode active material, 1 pt. mass of acetylene black, and 0.9 pts. mass of polyvinylidene fluoride were mixed, and an appropriate amount of N-methyl-2-pyrrolidone was added to prepare the positive electrode mixture slurry. Next, the positive electrode mixture slurry was applied on both surfaces of the long strip-shaped positive electrode current collector composed of aluminum foil, and the coating film was dried. After the dried coating film was compressed, it was cut to have a predetermined electrode size to produce the positive electrode having the positive electrode mixture layers formed on both surfaces of the positive electrode current collector. At the center of the positive electrode in the longitudinal direction, there was provided an exposed portion where the mixture layer did not exist and the surface of the current collector was exposed, and an aluminum-made positive electrode tab was welded to the exposed portion.

### [Production of Negative Electrode]

For the negative electrode active material, 94 pts. mass of graphite powder and 6 pts. mass of silicon oxide expressed as SiO (SiOₓ, x=1) having carbon coatings formed on the surfaces of particles were used. One hundred pts. mass of the negative electrode active material, 1.5 pts. mass of sodium carboxymethylcellulose, and 1 pt. mass of dispersion of styrene-butadiene rubber were mixed, and an appropriate amount of water was added to prepare the negative electrode mixture slurry. Next, the negative electrode mixture slurry was applied on both surfaces of the long strip-shaped negative electrode current collector composed of copper foil, the coating film was dried. After the dried coating film was compressed, it was cut to have a predetermined electrode size to produce the negative electrode having the negative electrode mixture layers formed on both surfaces of the negative electrode current collector. At one end of the negative electrode in the longitudinal direction (end positioned on the winding finishing side of the electrode assembly), there was provided an exposed portion where the mixture layer did not exist and the surface of the current collector was exposed, a nickel-made negative electrode tab was welded to the exposed portion.

### [Preparation of Non-Aqueous Electrolyte Solution]

In a mixed solvent having ethylene carbonate (EC) and dimethyl carbonate (DMC) mixed in 25:75 of volume ratio (1 atm, 25°C), LiPF₆ was dissolved in 1 mol/L of concentration to prepare the non-aqueous electrolyte solution.

### [Production of Non-Aqueous Electrolyte Secondary Battery]

After the aforementioned positive electrode and the aforementioned negative electrode were wound on a winding core via separators composed of polyethylene-made microporous films, the winding core was removed to produce the winding-type electrode assembly. Next, the electrode assembly was inserted into an iron-made cylindrical exterior can, the negative electrode tab underwent resistance welding to the inner surface of the bottom of the exterior can. After the aforementioned non-aqueous electrolyte solution was injected into the exterior can, the positive electrode tab was welded to the sealing assembly, and the opening of the exterior can was sealed with the sealing assembly to produce a cylindrical non-aqueous electrolyte secondary battery having 21 mm of diameter, 70 mm of height, and 4950 mAh of rated capacity Q. Charging and discharging were performed on this non-aqueous electrolyte secondary battery to reveal that dQor/dQ>dQsi/dQ at greater than or equal to 60% of SOC.

### [Evaluation of Capacity Retention Rate]

The aforementioned battery underwent CC charging at 1.5C of constant current until the battery voltage reached 4.2 V, and after that, underwent CV charging at 4.2 V of constant voltage until the current reached 102 mA. During the CC charging, a heater was operated to bring the control temperature to 40°C before the SOC reached 60%, and the operation of the heater was stopped to bring the control temperature to room temperature (25°C) after the SOC reached 60%. After the charging, the battery was discharged at 0.5C of constant current until the battery voltage reached 2.5 V. This charge-discharge cycle was repeated for 15 cycles, and the value obtained by dividing the 15th-cycle battery capacity by the first-cycle battery capacity was obtained as a capacity retention rate.

### [Evaluation of Rate of Increase in DC Resistance]

For each of the batteries that had undergone one of the charge-discharge cycles described above and the battery that had undergone the 15 charge-discharge cycles described above, at room temperature, constant current charging was performed at 0.3C of constant current until 4.2 V, and after reaching 4.2 V, constant voltage charging was performed until the current value reached 0.02C. After that, constant current discharging for 10 seconds was performed at 1C of constant current. There was set to a DC resistance (DCIR) the value obtained by dividing the difference between the open-circuit voltage (OCV) and the closed circuit voltage (CCV) after 10 seconds from the discharging by the discharging current after 10 seconds from the discharging, there was calculated a rate of increase in the DCIR after the 15 cycles relative to the DCIR after the first cycle.

### <Examples 2 and 3, and Comparative Examples 1 to 3>

CC-CV charging was performed as with Example 1 except that the charging conditions (the switching SOC, the control temperature (high temperature and low temperature), and the charging rate) were changed to the conditions presented in Table 1. Notably, for Comparative Examples 1 and 2, CC charging was performed at 25°C and 40°C, respectively, the control temperature not being switched.

**[Table 1]**

| | CC Charging Conditions | | | | Evaluation Results | |
|---|---|---|---|---|---|---|
| | Switching SOC [%] | High Temperature [°C] | Low Temperature [°C] | Charging Rate [C] | Capacity Retention Rate [%] | Rate of Increase in DC Resistance [%] |
| Example 1 | 60 | 40 | 25 | 1. 5 | 97 | 41 |
| Example 2 | 60 | 50 | 25 | 1. 5 | 98 | 39 |
| Example 3 | 30 | 40 | 25 | 1. 5 | 95 | 37 |
| Comparative Example 1 | - | 25 | | 1. 5 | 92 | 41 |
| Comparative Example 2 | - | 40 | | 1. 5 | 97 | 47 |
| Comparative Example 3 | 10 | 40 | 25 | 1. 5 | 93 | 42 |

As presented in Table 1, the charging profiles of the examples show that the capacity retention rates are higher than in the cases of the comparative examples and excellent cycle characteristics can be maintained. In other words, according to the charging profiles of the examples, charging can be efficiently performed while securing excellent cycle characteristics. Moreover, it is obvious from Comparative Examples 1 and 2 that bringing the control temperature during CC charging to high temperature causes the battery material to deteriorate and the resistance to rise, and in Example 1, the combination of high temperature and low temperature for the control temperature during CC charging can restrain the rate of increase in the DC resistance while maintaining the capacity retention rate to be high.

### REFERENCE SIGNS LIST

1 charging system, 2 charging control apparatus, 4 constant current charging control means, 5 constant voltage charging control means, 6 discharging control means, 8 switching means, 9 storage, 10 non-aqueous electrolyte secondary battery, 11 positive electrode, 12 negative electrode, 13 separator, 14 electrode assembly, 15 battery case, 16 exterior can, 17 sealing assembly, 18, 19 insulating plate, 20 positive electrode tab, 21 negative electrode tab, 22 grooved portion, 23 filter, 24 lower vent member, 25 insulating member, 26 upper vent member, 27 cap, 28 gasket, 30 battery monitoring unit, 100 power supply, 101 load

## Claims

1. A charging method of a non-aqueous electrolyte secondary battery, the non-aqueous electrolyte secondary battery comprising a positive electrode and a negative electrode that reversibly store and release lithium ions, the negative electrode including, as a negative electrode active material, a carbon material and a silicon compound, the charging method including
a switching step of switching a control temperature of the non-aqueous electrolyte secondary battery from a high temperature to a low temperature, wherein
timing of the switching step is determined by sensing that a ratio dQ_{Gr}/dQ of a change amount of a capacity Q_{Gr} of the carbon material relative to a change amount of a battery capacity Q becomes larger than a ratio dQ_{Si}/dQ of a change amount of a capacity Qsi of the silicon compound relative to the change amount of the battery capacity Q.

2. The charging method of a non-aqueous electrolyte secondary battery according to claim 1, wherein the ratio dQ_{Gr}/dQ and the ratio dQsi/dQ are calculated from a ratio dV/dQ of a change amount of an open-circuit voltage relative to the electric capacity Q.

3. The charging method of a non-aqueous electrolyte secondary battery according to claim 2, wherein the ratio dQ_{Gr}/dQ and the ratio dQ_{Si}/dQ are calculated, using a charging curve of the non-aqueous electrolyte secondary battery, a charging curve of the silicon compound included in the negative electrode, a charging curve of the carbon material included in the negative electrode, and a charging curve of the positive electrode, through calculation of minimizing a residual between the charging curve of the non-aqueous electrolyte secondary battery and a combination of the charging curves of the silicon compound, the carbon material, and the positive electrode, or using a discharging curve of the non-aqueous electrolyte secondary battery, a discharging curve of the silicon compound included in the negative electrode, a discharging curve of the carbon material included in the negative electrode, and a discharging curve of the positive electrode, through calculation of minimizing a residual between the discharging curve of the non-aqueous electrolyte secondary battery and a combination of the discharging curves of the silicon compound, the carbon material, and the positive electrode.

4. The charging method of a non-aqueous electrolyte secondary battery according to any one of claims 1 to 3, wherein the high temperature is greater than or equal to 35°C and less than or equal to 60°C.

5. The charging method of a non-aqueous electrolyte secondary battery according to any one of claims 1 to 4, wherein the low temperature is greater than or equal to 0°C and less than 35°C.

6. The charging method of a non-aqueous electrolyte secondary battery according to any one of claims 1 to 5, wherein the switching step is performed in such a range that a state of charge (SOC) of the non-aqueous electrolyte secondary battery is greater than or equal to 30% and less than or equal to 60%.

7. A charging and discharging method of a non-aqueous electrolyte secondary battery, wherein after the non-aqueous electrolyte secondary battery is charged by the charging method according to any one of claims 1 to 6, the non-aqueous electrolyte secondary battery is discharged.

8. A charging system of a non-aqueous electrolyte secondary battery, the charging system charging a non-aqueous electrolyte secondary battery comprising a negative electrode including a carbon material as a negative electrode active material, the charging system comprising:
a charging control apparatus that performs the charging method according to any one of claims 1 to 6.
